# EUROPÄISCHE PATENTANMELDUNG

(11) **EP 3 002 551 A1**
(43) Veröffentlichungstag der Anmeldung: **06.04.2016**
(21) Anmeldenummer: 15179037.5
(22) Anmeldetag: 30.07.2015
(51) Int. Cl.: G01B 11/275

(54) **REFERENZSYSTEM UND MESSWERTAUFNEHMER ZUM EINSATZ IN DER FAHRZEUGVERMESSUNG**

(30) Priorität: 23.09.2014 DE 102014219109
(71) Anmelder: ROBERT BOSCH GMBH, 70442 Stuttgart (DE)
(72) Erfinder: SCHWARZ, Andreas, 85221 Dachau (DE); HANNING, Tobias, 80993 Muenchen (DE); SCHILLER, Oleg, 85598 Baldham (DE); UFFENKAMP, Volker, 71642 Ludwigsburg (DE)

(57) **Zusammenfassung**

Ein Referenzsystem (2) zum Einsatz in der Fahrzeugvermessung weist wenigstens eine Positionierhilfe (10, 18) auf und ist in Bezug auf die wenigstens eine Positionierhilfe (10, 18) kalibrierbar. Die Erfindung betrifft auch einen Messwertaufnehmer (5) zur Fahrzeugvermessungen, der eine Aufnahmevorrichtung (20) aufweist, die zur Aufnahme eines erfindungsgemäßen Referenzsystems (2) ausgebildet ist, wobei die Aufnahmevorrichtung (20) mit der wenigstens einen Positionierhilfe (10, 18) derart zusammenwirkt, dass die Position des Referenzsystems (2) in Bezug auf den Messwertaufnehmer (5) exakt definiert ist, wenn das Referenzsystem (2) in der Aufnahmevorrichtung (20) angeordnet ist.

## Beschreibung

Die Erfindung betrifft die Referenzierung von Messwertaufnehmern in der Fahrzeugvermessung.

### Stand der Technik

Bekannte Anlagen zur Vermessung von Fahrzeugen, insbesondere Kraftfahrzeugen, wie sie beispielsweise in DE 10 043 354 A1 offenbart sind, weisen insgesamt vier sogenannte Messwertaufnehmer (MWA) auf, die mit jeweils einer Bildaufnahmeeinrichtung ausgestattet sind. Die Messwertaufnehmer sind an einem Messplatz seitlich des zu vermessenden Fahrzeugs so angeordnet, dass eine Bildaufnahmerichtung des Messwertaufnehmers orthogonal zu einem zugeordneten Rad des Fahrzeugs ausgerichtet sind.

Um mit einer derartigen Anordnung von vier Messwertaufnehmern eine Achsvermessung durchführen zu können, müssen die Positionen der Messwertaufnehmer relativ zueinander bekannt sein. Dazu müssen sich die Messwertaufnehmer in Bezug zueinander referenzieren. Erst nachdem eine solche Referenzierung durchgeführt worden ist, ist eine korrekte Achsvermessung möglich. Die Referenzierung kann z.B. durch Referenzsysteme erfolge, wobei an jedem Messwertaufnehmer jeweils ein Referenzsystem vorgesehen ist.

Die Referenzierung hängt von der Position des Referenzsystems in Bezug auf den zugehörigen Messwertaufnehmer ab. Wird das Referenzsystem eines Messwertaufnehmers ausgetauscht, muss das neue Referenzsystem erneut kalibriert werden.

Der Austausch eines Referenzsystems ist daher aufgrund der damit verbundenen Notwendigkeit der erneuten Kalibrierung zeit- und arbeitsaufwendig.

### Offenbarung der Erfindung

Es ist daher eine Aufgabe der Erfindung, die Austauschbarkeit der Referenzsysteme bei der optischen Fahrzeugvermessung zu verbessern.

Diese Aufgabe wird gelöst durch ein Referenzsystem zum Einsatz in der (optischen) Fahrzeugvermessung, das wenigstens wenigstens eine Positionierhilfe aufweist und in Bezug auf die wenigstens eine Positionierhilfe kalibrierbar ist.

Ein zugehöriger Messwertaufnehmer hat ein optisches Messsystem und eine Aufnahmevorrichtung, die zur Aufnahme eines erfindungsgemäßen Referenzsystems derart ausgebildet ist, dass die Aufnahmevorrichtung mit der wenigstens einen Positionierhilfe derart zusammenwirkt, dass die Position des Referenzsystems in Bezug auf das optische Messsystem exakt definiert ist, wenn das Referenzsystem korrekt in der Aufnahmevorrichtung angeordnet ist.

Die Erfindung umfasst auch Verfahren zur optischen Fahrzeugvermessung mit einem Referenzsystem, das wenigstens eine Positionierhilfe aufweist und in Bezug auf die wenigstens eine Positionierhilfe kalibrierbar ist; und einem Messwertaufnehmer mit wenigstens einer Bildaufnahmevorrichtung und einer Aufnahmevorrichtung, die zur Aufnahme des Referenzsystems derart ausgebildet, dass die Aufnahmevorrichtung mit der wenigstens einen Positionierhilfe des Referenzsystems derart zusammenwirkt, dass die Position des Referenzsystems in Bezug auf den Messwertaufnehmer exakt definiert ist, wenn das Referenzsystem in der Aufnahmevorrichtung angeordnet ist. Dabei umfasst das Verfahren die Schritte:
(A) das Referenzsystem in Bezug auf seine wenigstens eine Positionierhilfe zu kalibrieren;
(B) das Referenzsystem in der Aufnahmevorrichtung anzuordnen; und
(C) die Bildaufnahmevorrichtung zu kalibieren.

Auf diese Weise ist die Position des Referenzsystems in Bezug auf den Messwertaufnehmer durch das Zusammenwirken der Positionierhilfe mit der Aufnahmevorrichtung exakt festgelegt, so dass Referenzsysteme, die in Bezug auf ihre jeweilige Positionierhilfe kalibriert sind, beliebig ausgetauscht werden können, ohne dass erneut eine Kalibrierung durchgeführt werden muss. Der Austausch eines Referenzsystems wird dadurch erheblich beschleunigt und vereinfacht.

In einer Ausführungsform des Verfahrens umfasst der Schritt (C), die Bildaufnahmevorrichtung auf den Koordinatenursprung des Referenzsystems zu kalibrieren.

In einer alternativen Ausführungsform des Verfahrens umfasst der Schritt (C), die Bildaufnahmevorrichtung auf einen Koordinatenursprung zu kalibrieren, der sich vom Koordinatenursprung des Referenzsystems unterscheidet.

Dabei kann der Schritt (C) zusätzlich umfassten, die Beziehung der Koordinatenursprünge des Referenzsystems und der Bildaufnahmevorrichtung zu bestimmen.

In einer Ausführungsform umfasst das Verfahren, das Referenzsystem auszutauschen und die Kalibrierung der Bildaufnahmevorrichtung durch eine Null-Punkt-Verschiebung an das neue Referenzsystem anzupassen.

In einer Ausführungsform ist die wenigstens eine Positionierhilfe mechanisch ausgebildet und kann insbesondere wenigstens einen mechanischen Anschlag umfassen.

In einer Ausführungsform weist die Aufnahmevorrichtung wenigstens eine Leiste auf, die ausgebildet ist, mit der mit der wenigstens einen Positionierhilfe mechanischen zusammenzuwirken, um das Referenzsystem exakt in der Aufnahmevorrichtung zu positionieren. Die Leiste kann insbesondere L-förmig ausgebildet sein, um das Referenzsystem durch Zusammenwirken mit der wenigstens einen Positionierhilfe in zwei Raumrichtungen exakt zu positionieren.

Durch eine mechanische Positionierhilfe und einen mechanischer Anschlag, der insbesondere als Leiste ausgebildet ist, ist eine exakte Positionierung des Referenzsystems besonders zuverlässig, einfach und kostengünstig realisierbar.

In einer Ausführungsform umfasst das Referenzsystem wenigstens eine Bildaufnahmevorrichtung, insbesondere eine Kamera, die ausgebildet ist, Referenzmarken eines gegenüberliegenden Referenzsystems zu erfassen, um die relative Position der Referenzsysteme zu bestimmen.

In einer Ausführungsform weist der Messwertaufnehmer wenigstens eine Bildaufnahmevorrichtung zur optischen Fahrzeug- bzw. Fahrwerksvermessung auf. Der Messwertaufnehmer kann insbesondere zwei Bildaufnahmevorrichtungen und/oder einer Stereo-Bildaufnahmevorrichtung aufweisen, um dreidimensionale Bildinformationen zur Verfügung zu stellen.

Die Erfindung umfasst auch ein System zur optischen Fahrzeugvermessung mit wenigstens einem erfindungsgemäßen Referenzsystem und wenigstens einem Messwertaufnehmer, der mit einer Aufnahmevorrichtung zur Aufnahme eines erfindungsgemäßen Referenzsystem ausgebildet ist.

Ein solches System zur optischen Fahrzeugvermessung kann insbesondere mehrere Messwertaufnehmer und Referenzsysteme umfassen, wobei die Referenzsysteme auf einen gemeinsamen Koordinatenursprung kalibriert sind, so dass die Bildinformationen, die von mehreren Messwertaufnehmern gewonnen worden sind, in einem gemeinsamen Koordinatensystem darstellbar sind.

Das System kann zusätzlich wenigstens eine optisch erfassbare Messmarke umfassen, die an einem zu vermessenen Fahrzeug montierbar ist, um die Bildaufnahme und die darauf basierende Bildauswertung zu verbessern. Die Messmarke kann aktiv, d.h. selbst leuchtend, oder passiv, d.h. reflektierend, ausgebildet sein.

Die Erfindung umfasst auch eine Kalibriervorrichtung für ein erfindungsgemäßes Referenzsystem, die mit einer Aufnahmevorrichtung zur Aufnahme eines erfindungsgemäßen Referenzsystem ausgebildet ist und es ermöglicht, das Referenzsystem an einer exakt definierten Position aufzunehmen und zu kalibrieren.

Die Erfindung wird im Folgenden anhand eines in den Figuren gezeigten Ausführungsbeispiels näher erläutert:

### Kurze Beschreibung der Figuren:

Figur 1 zeigt in einer schematischen Darstellung eine Draufsicht auf einen Messplatz zur Fahrzeugvermessung mit vier Messwertaufnehmern und einem Fahrgestell eines Fahrzeugs.
Figur 2 zeigt eine perspektivische Ansicht eines Ausführungsbeispiels eines erfindungsgemäßen Referenzsystems aus einer ersten Blickrichtung.
Figur 3 zeigt eine perspektivische Ansicht eines Ausführungsbeispiels eines erfindungsgemäßen Referenzsystems aus einer zweiten Blickrichtung.
Figur 4 zeigt eine perspektivische Ansicht eines Ausführungsbeispiels eines erfindungsgemäßen Referenzsystems aus einer dritten Blickrichtung.
Figur 5 zeigt ein Ausführungsbeispiel eines erfindungsgemäßen Referenzsystems und ein Ausführungsbeispiel für eine geeigneten Aufnahmevorrichtung.
Figur 6 zeigt ein Ausführungsbeispiel eines erfindungsgemäßen Referenzsystems, das in einer geeigneten Aufnahmevorrichtung positioniert ist.

### Figurenbeschreibung:

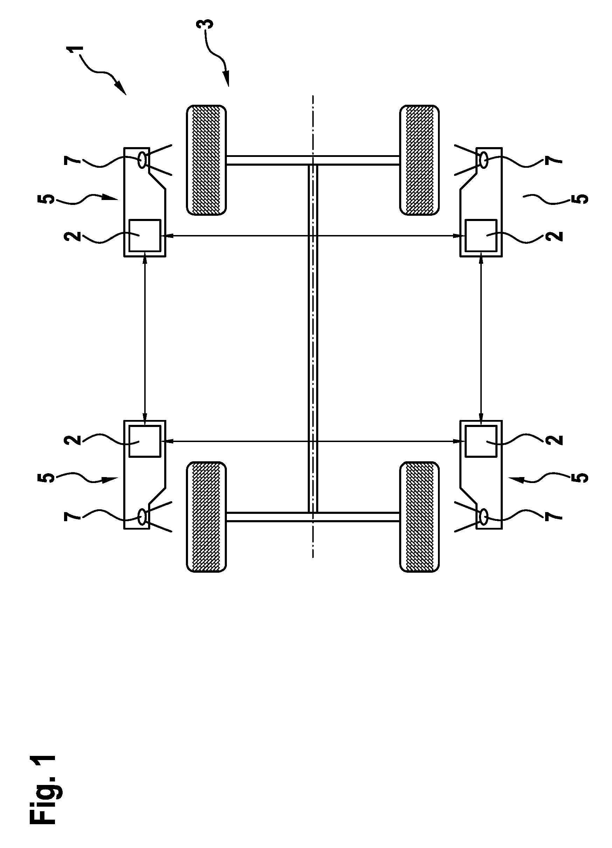

Figur 1 zeigt in einer schematischen Draufsicht einen Messplatz 1 zur Fahrzeugvermessung, mit einem ebenfalls schematisch dargestellten Fahrgestell 3 eines (Kraft-)Fahrzeugs.

An dem Messplatz 1 sind vier Messwertaufnehmer 5 angeordnet, die jeweils eine optische Aufnahmevorrichtung 7 und ein Referenzsystem 2 aufweisen.

Durch die Referenzsysteme 2 ist die Position des jeweiligen Messwertaufnehmers 5 im Raum bekannt, so dass die von den optischen Aufnahmevorrichtungen 7 aufgenommenen Bildinformationen einem globalen Koordinatensystem zugeordnet werden können, wenn die Position der jeweiligen Bildaufnahmevorrichtung 7 in Bezug auf das Referenzsystem 2 bekannt ist. Dazu müssen die Referenzsysteme 2 in Bezug auf den zugehörigen Messwertaufnehmer 5 bzw. die zugehörige optische Aufnahmevorrichtung 7 kalibriert werden.

Wird ein Referenzsystem 2 ausgetauscht, ist es bisher erforderlich, die Kalibrierung zu wiederholen.

Die Erfindung ermöglicht es, das Referenzsystem 2 eines optischen Messwertaufnehmers 5 auszutauschen, ohne dass nach dem Austausch eine erneute Kalibrierung des Referenzsystems 2 erforderlich ist.

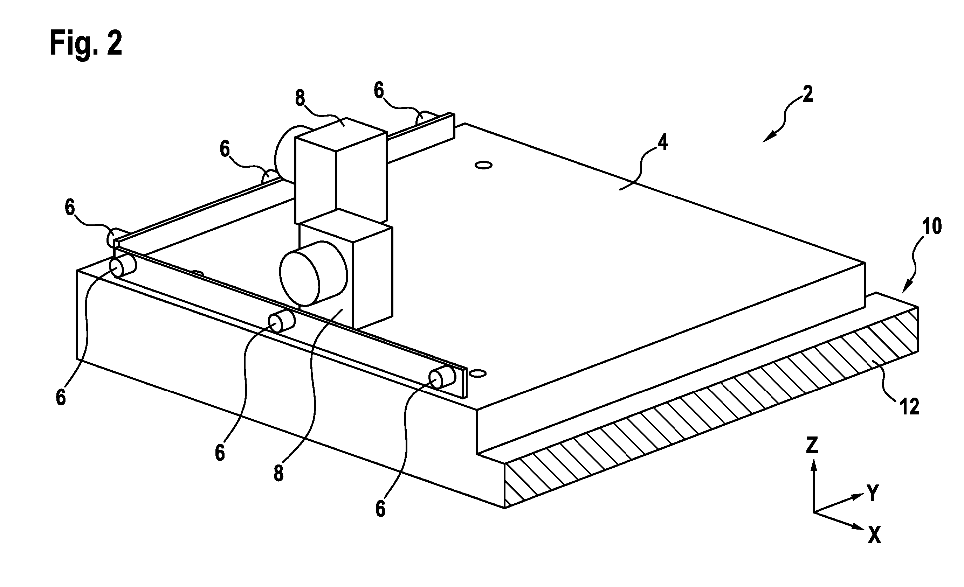

Figur 2 zeigt eine schematische perspektivische Ansicht eines Ausführungsbeispiels eines erfindungsgemäßen Referenzsystems 2. Das Referenzsystem 2 weist eine Grundplatte 4 auf, auf der zwei Referenzkameras 8 angeordnet sind, wobei die Blickrichtungen der beiden Referenzkameras 8 um 90° gegeneinander verdreht sind.

Vor den Referenzkameras 8 sind jeweils drei Messtargets bzw. Aktoren 6 angeordnet, die von der Referenzkamera 8 eines gegenüberliegenden Referenzsystems 2 optisch erfasst werden können, um die relative Position zweier einander gegenüberliegender Referenzsysteme 2 zu bestimmen.

Der Fachmann erkennt sofort, dass die in den Figuren gezeigte Anordnung der Referenzkameras 8 und der Messtargets bzw. Aktoren 6 nur beispielhaft und keine Voraussetzung für die Realisierung der Erfindung ist.

Auf der in der Figur 2 rechts unten dargestellten Seite weist die Grundplatte 4 des Referenzsystems 2 einen Vorsprung 10 mit einer dem Betrachter (in x-Richtung) zugewandten ersten Referenzfläche 12 auf, die es ermöglicht, das Referenzsystem 2 in einer geeigneten Aufnahmevorrichtung in x-Richtung exakt zu positionieren, indem die erste Referenzfläche 12 in Anschlag mit einer korrespondierenden Anschlagfläche der (in der Figur 2 nicht gezeigten) Aufnahmevorrichtung gebracht wird.

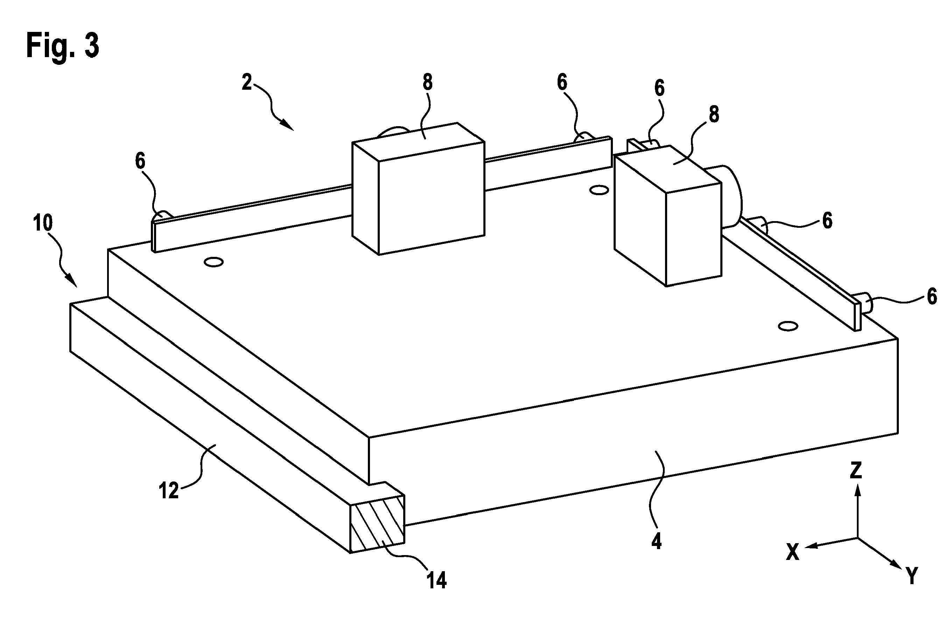

Figur 3 zeigt das in der Figur 2 gezeigte Referenzsystem 2 aus einem anderen Blickwinkel, so dass der Vorsprung 10 mit der ersten Referenzfläche 12 auf der linken Seite der Figur 3 dargestellt ist. In der Ansicht der Figur 3 ist erkennbar, dass der Vorsprung 10 eine zweite Referenzfläche 14 aufweist, die orthogonal zur y-Richtung ausgerichtet ist und es ermöglicht, das Referenzsystem 2 in einer geeigneten Aufnahmevorrichtung auch in der y-Richtung exakt zu positionieren, indem die zweite Referenzfläche 14 in Anschlag mit einer korrespondierenden Anschlagfläche der (in der Figur 3 nicht gezeigten) Aufnahmevorrichtung gebracht wird.

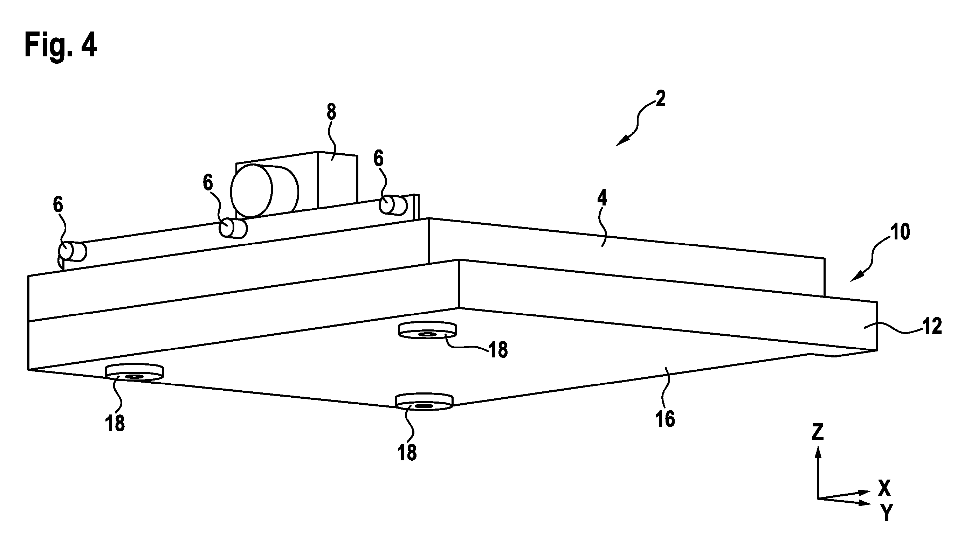

Figur 4 zeigt schließlich das in den Figuren 2 und 3 gezeigte Referenzsystem 2 von schräg unten. In der Figur 4 ist erkennbar, dass auf einer Unterseite 16 der Grundplatte 4 drei mechanische Auflagepunkte 18 ausgebildet sind, die es ermöglichen, das Referenzsystem 2 auf einer ebenen Fläche einer geeignet ausgebildeten Aufnahmevorrichtung, die in der Figur 4 nicht gezeigt ist, auch in der z-Richtung exakt zu positionieren.

Das in den Figuren 2 bis 4 gezeigte Referenzsystem 2 ist daher durch die erste Referenzfläche 12, die zweite Referenzfläche 14 und die Auflagepunkte 18 in allen drei Raumrichtungen und -winkeln exakt in einer geeignet ausgebildeten Aufnahmevorrichtung positionierbar.

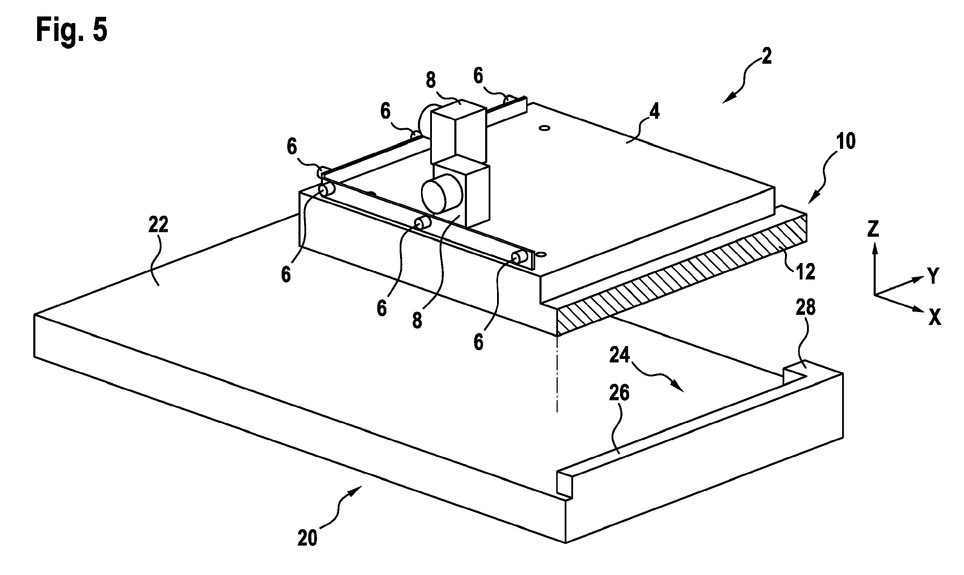

Figur 5 zeigt eine perspektivische schematische Ansicht eines Ausführungsbeispiels eines erfindungsgemäßen Referenzsystems 2 und eines Ausführungsbeispiels für eine Aufnahmevorrichtung 20, wie sie an einem optischen Messsystem 7 oder einer (nicht gezeigten) Kalibriervorrichtung ausgebildet sein kann, um ein erfindungsgemäßes Referenzsystem 2 aufzunehmen und in allen drei Raumrichtungen und -winkeln exakt zu positionieren.

Die Aufnahmevorrichtung 20 weist eine Ebene oder Fläche 22 auf, die ausgebildet ist, die Auflagepunkte 18, die auf der Unterseite 16 des Referenzsystems 2 ausgebildet sind, abzustützen und auf diese Weise die Position des Referenzsystems 2 entlang der z-Achse und die Inklination bzw. Neigung des Referenzsystems 2 gegenüber der z-Achse (Rotation um die x- bzw. y-Achse) exakt festzulegen.

Die Aufnahmevorrichtung 20 weist darüber hinaus eine einer L-förmige Leiste 24 auf, die auf der ebenen Fläche 22 ausgebildet ist. Die Leiste 24 hat einen ersten Schenkel 26, der sich auf der ebenen Fläche 22 parallel zur y-Richtung erstreckt, und einen zweiten Schenkel 28, der sich auf der ebenen Fläche 22 parallel zur x-Richtung erstreckt.

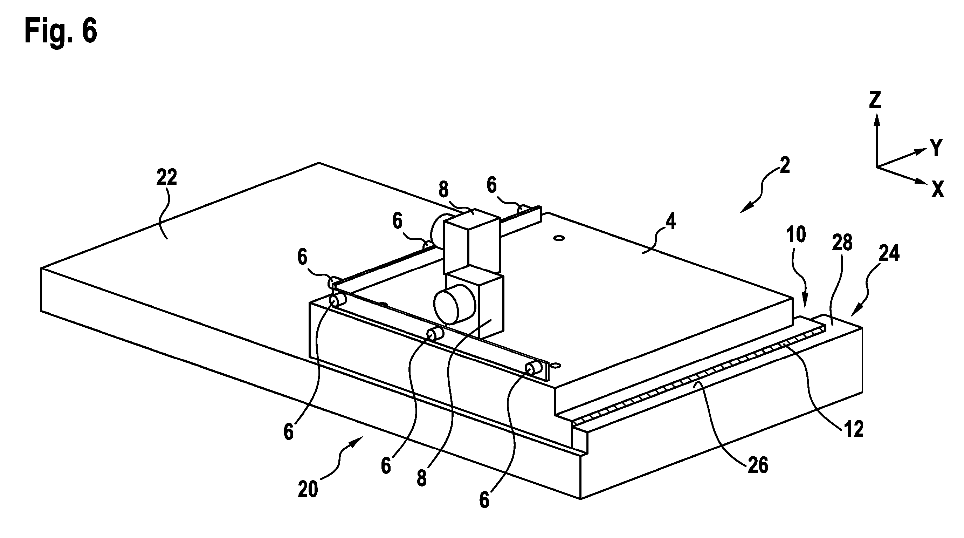

Wie in der Figur 6 gezeigt, wird das Referenzsystem 2 derart in der Aufnahmevorrichtung 20 positioniert, dass die erste Referenzfläche 12 des Referenzsystems 2 an dem ersten Schenkel 26 zum Anschlag kommt, und die zweite Referenzfläche 14, die in den Figuren 5 und 6 nicht sichtbar ist, an dem zweiten Schenkel 28 zum Anschlag kommt, so dass das Referenzsystem 2 durch das Zusammenwirken der ersten und der zweiten Referenzfläche 12, 14 mit dem ersten Schenkel 26 bzw. dem zweiten Schenkel 28 der Leiste 24 in der x-Richtung und in der y-Richtung exakt positioniert ist. Auch der Winkel des Referenzsystem 2 bezügliche einer Drehung um die z-Achse wird durch das Zusammenwirken der ersten und der zweiten Referenzfläche 12, 14 mit der Leiste 24 exakt festgelegt.

Ein in Bezug auf seine Referenzflächen 12, 14 und die Anschlagpunkte 18 kalibriertes Referenzsystem 2 kann daher einfach und schnell ausgetauscht werden, ohne dass in der Folge eine erneute Kalibrierung des Referenzsystems 2 bzw. der Messwertaufnehmer 5 erforderlich ist. Die Referenzsysteme 2 der Messwertaufnehmer 5 sind daher austauschbar, so dass die Handhabung der Messwertaufnehmer 5 verbessert wird, die Messwertaufnehmer 5 flexibel eingesetzt werden können und Messfehler, die sich bei der Verwendung herkömmlicher Messwertaufnehmer 5 ergeben können, wenn nach einem Austausch des Referenzsystems 2 keine erneute Kalibrierung vorgenommen wird, zuverlässig vermieden werden können.

## Patentansprüche

1. Referenzsystem (2) zum Einsatz in der optischen Fahrzeugvermessung
**dadurch gekennzeichnet, dass** das Referenzsystem (2) wenigstens eine Positionierhilfe (10, 18) aufweist, die ausgebildet ist, um das Referenzsystem (2) bei der Aufnahme in einer geeigneten Aufnahmevorrichtung exakt zu positionieren, wobei das Referenzsystem (2) in Bezug auf die wenigstens eine Positionierhilfe (10, 18) kalibrierbar ist.

2. Referenzsystem (2) nach Anspruch 1, wobei die wenigstens eine Positionierhilfe (10, 18) mechanisch ausgebildet ist, und insbesondere wenigstens einen mechanischen Anschlag (12, 14) umfasst.

3. Referenzsystem nach einem der Ansprüche 1 oder 2, wobei das Referenzsystem (2) wenigstens eine Bildaufnahmevorrichtung (8), insbesondere eine Kamera, aufweist.

4. Messwertaufnehmer (5) zur Fahrzeugvermessung **dadurch gekennzeichnet, dass**
der Messwertaufnehmer (5) eine Aufnahmevorrichtung (20) aufweist, die zur Aufnahme eines Referenzsystems (2) nach einem der Ansprüche 1 bis 3 derart ausgebildet ist, dass die Aufnahmevorrichtung (20) mit der wenigstens einen Positionierhilfe (10, 18) so zusammenwirkt, dass die Position des Referenzsystems (2) in Bezug auf den Messwertaufnehmer (5) exakt definiert ist, wenn das Referenzsystem (2) bestimmungsgemäß in der Aufnahmevorrichtung (20) angeordnet ist.

5. Messwertaufnehmer (5) nach Anspruch 4, wobei die Aufnahmevorrichtung (20) wenigstens eine Leiste (24) aufweist, die zum mechanischen Zusammenwirken mit der wenigstens einen Positionierhilfe (10, 18) ausgebildet ist, wobei die Leiste (24) insbesondere L-förmig ausgebildet ist, um die Referenzvorrichtung durch Zusammenwirken mit der wenigstens einen Positionierhilfe (10, 18) in zwei Raumrichtungen zu positionieren.

6. System zur optischen Fahrzeugvermessung mit
(a) wenigstens einem Referenzsystem (2) nach einem der Ansprüche 1 bis 3; und
(b) wenigstens einem Messwertaufnehmer (5) nach Anspruch 4 oder 5.

7. System nach Anspruch 6, wobei der Messwertaufnehmer (5) wenigstens eine Bildaufnahmevorrichtung (7), insbesondere zwei Bildaufnahmevorrichtungen (7) und/oder einer Stereo-Bildaufnahmevorrichtung (7), umfasst.

8. System nach Anspruch 6 oder 7 das mehrere Messwertaufnehmer (5) und Referenzsysteme (2) umfasst, wobei die Referenzsysteme (2) auf einen gemeinsamen Koordinatenursprung kalibriert sind.

9. Kalibriervorrichtung zum Kalibirieren eines Referenzsystems (2) nach einem der Ansprüche 1 bis 3 **dadurch gekennzeichnet, dass**
die Kalibriervorrichtung eine Aufnahmevorrichtung (20) aufweist, die zur Aufnahme des Referenzsystems (2) derart ausgebildet ist, dass die Aufnahmevorrichtung (20) mit der wenigstens einen Positionierhilfe (10, 18) derart zusammenwirkt, dass die Position des Referenzsystems (2) in Bezug auf die Kalibriervorrichtung exakt definiert ist, wenn das Referenzsystem (2) in der Aufnahmevorrichtung (20) angeordnet ist.

10. Verfahren zur optischen Fahrzeugvermessung mit
(a) einem Referenzsystem (2), das wenigstens eine Positionierhilfe (10, 18) aufweist und in Bezug auf die wenigstens eine Positionierhilfe (10, 18) kalibrierbar ist; und
(b) einem Messwertaufnehmer (5) mit wenigstens einer Bildaufnahmevorrichtung (7) und einer Aufnahmevorrichtung (20), die zur Aufnahme des Referenzsystems (2) derart ausgebildet, dass die Aufnahmevorrichtung (20) mit der wenigstens einen Positionierhilfe (10, 18) des Referenzsystems (2) derart zusammenwirkt, dass die Position des Referenzsystems (2) in Bezug auf den Messwertaufnehmer (5) exakt definiert ist, wenn das Referenzsystem (2) in der Aufnahmevorrichtung (20) angeordnet ist, wobei das Verfahren umfasst,
(A) das Referenzsystem (2) in Bezug auf seine wenigstens eine Positionierhilfe (10, 18) zu kalibrieren;
(B) das Referenzsystem (2) in der Aufnahmevorrichtung (20) anzuordnen; und
(C) die Bildaufnahmevorrichtung (7) zu kalibieren.

11. Verfahren nach Anspruch 10, wobei der Schritt (C) umfasst, die Bildaufnahmevorrichtung (7) auf den Koordinatenursprung des Referenzsystems (2) zu kalibrieren.

12. Verfahren nach Anspruch 10, wobei der Schritt (C) umfasst, die Bildaufnahmevorrichtung (7) auf einen Koordinatenursprung zu kalibrieren, der sich vom Koordinatenursprung des Referenzsystems (2) unterscheidet.

13. Verfahren nach Anspruch 12, wobei der Schritt (C) zusätzlich umfasst, die Beziehung der Koordinatenursprünge des Referenzsystems (2) und der Bildaufnahmevorrichtung (7) zu bestimmen.

14. Verfahren nach einem der Ansprüche 10 bis 13, das zusätzlich umfasst, das Referenzsystem (2) auszutauschen und die Kalibrierung der Bildaufnahmevorrichtung (7) durch eine Null-Punkt-Verschiebung an das neue Referenzsystem (2) anzupassen.
